(19) Europäisches Patentamt / European Patent Office / Office européen des brevets

(11) **EP 4 467 783 B1**

(12) # EUROPEAN PATENT SPECIFICATION

(45) Date of publication and mention of the grant of the patent:
**23.09.2026 Bulletin 2026/39**

(21) Application number: **24735461.6**

(22) Date of filing: **22.02.2024**

(51) International Patent Classification (IPC):
***F01N 3/28*** (2006.01) ***C04B 38/00*** (2006.01)
***D06M 11/45*** (2006.01) ***D06M 11/79*** (2006.01)
***D06M 15/09*** (2006.01) ***D06M 15/233*** (2006.01)
***D06M 15/263*** (2006.01) ***D06M 15/333*** (2006.01)
***D06M 15/693*** (2006.01)

(52) Cooperative Patent Classification (CPC):
(C-Sets available)
**F01N 3/2853; C04B 30/02; C04B 38/0006; D06M 11/45; D06M 11/79; D06M 15/09; D06M 15/233; D06M 15/263; D06M 15/333; D06M 15/55; D06M 15/693; D21H 13/36; D21H 15/02;** C04B 2111/00793; C04B 2111/2046;
(Cont.)

(86) International application number:
**PCT/JP2024/006554**

(87) International publication number:
**WO 2024/209827 (10.10.2024 Gazette 2024/41)**

(54) **MAT MADE BY PAPERMAKING PROCESS, AND METHOD FOR MANUFACTURING MAT MADE BY PAPERMAKING PROCESS**

DURCH EIN PAPIERHERSTELLUNGSVERFAHREN HERGESTELLTE MATTE UND VERFAHREN ZUR HERSTELLUNG EINER DURCH EIN PAPIERHERSTELLUNGSVERFAHREN HERGESTELLTEN MATTE

MAT OBTENU PAR PROCESSUS DE FABRICATION DE PAPIER, ET PROCÉDÉ DE PRODUCTION DE MAT ISSU LEDIT PROCESSUS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.04.2023 JP 2023060457**
**11.09.2023 JP 2023147008**

(43) Date of publication of application:
**27.11.2024 Bulletin 2024/48**

(73) Proprietor: **IBIDEN CO., LTD.**
**Ogaki-shi, Gifu 503-8604 (JP)**

(72) Inventors:
- **MATSUDA, Wataru**
**Takahama-shi, Aichi 444-1301 (JP)**
- **YAMAZAKI, Tomohisa**
**Takahama-shi, Aichi 444-1301 (JP)**
- **MAEDA, Toshiyuki**
**Takahama-shi, Aichi 444-1301 (JP)**

(74) Representative: **Winter, Brandl - Partnerschaft mbB**
**Alois-Steinecker-Straße 22**
**85354 Freising (DE)**

(56) References cited:
**EP-A1- 4 012 085**
**JP-A- 2008 082 310**
**JP-A- 2016 089 776**
**JP-A- 2016 108 987**
**JP-A- 2017 177 005**
**JP-A- 2022 156 707**
**US-B2- 8 999 251**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
F01N 3/0222

C-Sets
**C04B 30/02, C04B 14/06, C04B 14/022, C04B 14/303, C04B 14/306, C04B 14/324, C04B 14/327, C04B 14/4656, C04B 24/281, C04B 24/383, C04B 24/2611, C04B 24/2623, C04B 24/2641, C04B 24/2676, C04B 2103/0053; C04B 38/0006, C04B 35/565, C04B 38/0054, C04B 38/0074**

## Description

TECHNICAL FIELD

The present invention relates to a papermaking mat and a method for producing a papermaking mat.

BACKGROUND ART

Exhaust gas discharged from an internal combustion engine such as a diesel engine contains a particulate matter (hereinafter, also referred to as "PM"). Adverse effects of PM on the environment and human bodies have been problems. The exhaust gas also contains harmful gas components such as CO, HC, and NOx, causing concerns about effects of such harmful gas components on the environment and human bodies.

In view of the above, various exhaust gas conversion apparatuses that collect PM in exhaust gas and convert harmful gas components have been proposed. Such an exhaust gas conversion apparatus includes an exhaust gas treatment unit including porous ceramic such as silicon carbide or cordierite, a casing for housing the exhaust gas treatment unit, and a holding sealing material (mat material) between the exhaust gas treatment unit and the casing. The holding sealing material (mat material) is disposed mainly, for example, for preventing the exhaust gas treatment unit from being damaged by contact with the casing that covers the periphery of the exhaust gas treatment unit due to vibrations and impacts caused by operation of automobiles or the like, and for preventing exhaust gas leakage from a space between the exhaust gas treatment unit and the casing.

For increasing the force (surface pressure) of the mat material for holding the exhaust gas treatment unit, WO 2018/012423 A1 discloses a mat material in which the surface pressure is improved by producing an alumina fiber aggregate using a specific spinning aid.

In JP 2008-82310 A, massive aggregated fibers each formed from fibers that are aggregated into a mass to have a diameter of 1 to 5 mm and a total length of 2 to 3 mm are added to a papermaking sheet so as to improve the holding force (surface pressure) of the papermaking sheet.

EP 4 012 085 A1 and US 8 999 251 B2 disclose needle-punched mats, which have different properties and manufacturing method compared to papermaking mats.

SUMMARY OF INVENTION

- Technical Problem

The mat material disclosed in WO 2018/012423 A1 is made of easily breakable alumina fibers and is prone to a decrease in the surface pressure.

While each of the mat materials disclosed in WO 2018/012423 A1 and JP 2008-82310 A is wound around an exhaust gas treatment unit during use, the difference between the inner and outer circumferences of the mat material when wound may cause a crack in the mat material.

In particular, in the mat material disclosed in JP 2008-82310 A, the density of the inorganic fibers present between the massive aggregated fibers is low, and the mat material is prone to cracking.

In the papermaking sheet material disclosed in JP 2008-82310 A, the needled sheet is subjected to dry-type fiber opening. Thus, the opened fibers are short in length, and the fibers constituting the massive aggregated fibers are also short in length. Therefore, the fibers constituting the massive aggregated fibers are not sufficiently entangled with each other, so that the massive aggregated fibers cannot be formed into a twisted shape. Such massive aggregated fibers are also short. Therefore, the massive aggregated fibers fail to achieve a sufficiently high elasticity, resulting in a difficulty in sufficiently increasing the surface pressure of a papermaking sheet material to be produced.

The present invention is made in view of the above problems and aims to provide a papermaking mat that is less likely to crack even when wound around a base material and that has a sufficiently high surface pressure.

- Solution to Problem

This object is solved by the subject-matter of the independent claims. Further aspects are disclosed in the dependent claims. Specifically, the papermaking mat of the present invention is a papermaking mat including: inorganic fibers including inorganic fibers forming fiber bundles each formed from 10 or more of the inorganic fibers entangled and twisted together, and inorganic fibers forming no fiber bundles, wherein the fiber bundles have an average length of more than 5 mm, the inorganic fibers include at least one selected from the group consisting of alumina fibers, silica fibers, alumina-silica fibers, mullite fibers, glass fibers, and bio-soluble fibers, and when the papermaking mat is subjected to fiber opening by a fiber opening method for papermaking mats described below to obtain a slurry containing the inorganic fibers,

the inorganic fibers in the slurry have a bulk specific gravity in water of 0.012 to 0.035 g/cm$^3$, fiber opening method for papermaking mats:

a papermaking mat is heat-treated at 600°C for one hour;
5.0 g of fibers is weighed out from the papermaking mat while loosening the fibers, and the fibers are put in a container holding 400 cc of water;
the fibers are stirred using a stirrer at a rotation speed of 1000 rpm for 10 minutes and then transferred to a graduated cylinder container, and water is added to make a total volume of 500 cc; and
after standing for 30 minutes, the height of settled fibers is read, and the bulk specific gravity in water is calculated using the following calculation formula (1): bulk specific gravity in water (g/cm$^3$) = 5.0 (g)/volume of settled fibers (cm$^3$) (1).

The papermaking mat of the present invention includes fiber bundles.

Each fiber bundle is formed from 10 or more of the inorganic fibers entangled and twisted together. These fiber bundles support each other and are thus not easily deformed by pressure. Therefore, when a pressure is applied to the papermaking mat, the fiber bundles serve as cores and can reduce the pressure applied to the inorganic fibers forming no fiber bundles. This makes it possible to prevent the inorganic fibers forming no fiber bundles from being broken by pressure. As a result, the papermaking mat of the present invention has a high surface pressure.

In the papermaking mat of the present invention, the fiber bundles have an average length of more than 5 mm.

The papermaking mat of the present invention is produced by flowing a slurry containing inorganic fibers in a certain direction and scooping up the inorganic fibers.

When the slurry contains fiber bundles having an average length of more than 5 mm, the papermaking mat of the present invention to be produced will also contain such fiber bundles.

Flowing the slurry containing the fiber bundles in a certain direction causes the fiber bundles to be caught by other inorganic fibers and easily oriented in a direction perpendicular to the flowing direction of the slurry.

The fiber bundle is stronger and harder to bend than a single inorganic fiber. Therefore, a papermaking mat in which fiber bundles are oriented in one direction is hard to bend in the direction in which the fiber bundles are oriented but is easy to bend in a direction perpendicular to the direction in which the fiber bundles are oriented.

Thus, even when the papermaking mat is bent in the direction perpendicular to the direction in which the fiber bundles are oriented, such bending is less likely to produce stress. In addition, such stress is less likely to cause cracking.

Therefore, the papermaking mat of the present invention is less likely to crack even when wound around a base material.

The papermaking mat of the present invention includes fiber bundles. Thus, when the papermaking mat of the present invention is subjected to fiber opening by the fiber opening method described above, the fiber bundles are not opened and remain as they are. In the slurry after fiber opening, the density of the inorganic fibers at a portion including fiber bundles is higher than that at a portion including no fiber bundles.

That the bulk specific gravity in water of the inorganic fibers contained in the slurry after fiber opening is 0.012 to 0.035 g/cm$^3$ means that the proportion of the fiber bundles contained in the papermaking mat is appropriate, and the effect of preventing the inorganic fibers forming no fiber bundles from being broken by pressure can be suitably exerted.

When the bulk specific gravity in water of the inorganic fibers contained in the slurry after fiber opening is less than 0.012 g/cm$^3$, the proportion of the fiber bundles contained in the papermaking mat is low, reducing the surface pressure of the papermaking mat.

When the bulk specific gravity in water of the inorganic fibers contained in the slurry after fiber opening is more than 0.035 g/cm$^3$, the proportion of the fiber bundles contained in the papermaking mat is high, reducing the flexibility of the papermaking mat.

Preferably, the papermaking mat of the present invention contains an organic binder in an amount of 0.1 to 20 parts by weight and an inorganic binder in an amount of 0.1 to 10 parts by weight per 100 parts by weight of the inorganic fibers.

The organic binder and the inorganic binder bond the inorganic fibers to each other and maintain the shape of the papermaking mat.

When the amounts of the organic binder and the inorganic binder are in the above ranges, adhesion between the inorganic fibers is appropriate, and both flexibility and shape maintainability of the papermaking mat can be achieved.

In addition, falling off of the inorganic fibers from the papermaking mat and scattering of the inorganic fibers can be reduced or prevented.

In the papermaking mat of the present invention, preferably, the organic binder has a glass transition temperature Tg of 5°C or lower.

When the organic binder has a glass transition temperature Tg of 5°C or lower, an organic binder film formed of the organic binder has high strength, and a papermaking mat having high film elongation and excellent flexibility can be

obtained.

In the papermaking mat of the present invention, preferably, the organic binder is at least one selected from the group consisting of: acrylic resins, acrylate latices, rubber latices, carboxymethyl cellulose and polyvinyl alcohol, all of which act as water-soluble organic polymers; styrene resins that act as a thermoplastic resin; and epoxy resins that act as a thermosetting resin.

In the papermaking mat of the present invention, preferably, the inorganic binder contains at least one selected from the group consisting of alumina, silica, silicon carbide, zirconia, boron nitride, diamond, and pumice.

These organic binders and inorganic binders are suitable for bonding the inorganic fibers to each other and maintaining the shape of the papermaking mat.

In the papermaking mat of the present invention, preferably, the fiber bundles are each formed from 10 or more of the inorganic fibers entangled, the fiber bundles each formed from 10 or more of the inorganic fibers entangled have an average length of more than 5 mm but not more than 15 mm, and the fiber bundles each formed from 10 or more of the inorganic fibers entangled have an average width of 0.2 to 1.0 mm.

When the fiber bundles are in the above form, the fiber bundles serve as cores having an appropriate strength and can reduce the pressure applied to the inorganic fibers. This makes it possible to prevent the inorganic fibers forming no fiber bundles from being broken by pressure. As a result, the papermaking mat of the present invention has a higher surface pressure.

In the papermaking mat of the present invention, preferably, the fiber bundles include a crimped fiber bundle, and the trace length of the crimped fiber bundle as measured by the trace length measurement method described below is greater than the length of the crimped fiber bundle by 0.1 mm or more:
trace length measurement method:

a crimped fiber bundle is placed still on a flat surface; and
the crimped fiber bundle placed still is traced therealong from one end to another end thereof as viewed from above to determine a traced distance as "trace length of the crimped fiber bundle".

When the trace length of the crimped fiber bundle is greater than the length of the crimped fiber bundle by 0.1 mm or more, the crimped fiber bundle has high elasticity, increasing the surface pressure of the resulting papermaking mat.

The method for producing a papermaking mat of the present invention is a method for producing a papermaking mat, the method including: a fiber opening step of subjecting an inorganic fiber molded body consisting of an aggregate of inorganic fibers is stirred to fiber opening by using a stirrer in water and producing a slurry containing the inorganic fibers that include: inorganic fibers forming fiber bundles each formed from 10 or more of the inorganic fibers entangled and twisted together, and inorganic fibers forming no fiber bundles; and a papermaking step of papermaking from the slurry to obtain a papermaking mat, wherein in the fiber opening step, fiber opening is performed such that the fiber bundles have an average length of more than 5 mm and that the inorganic fibers in the slurry have a bulk specific gravity in water of 0.012 to 0.035 g/cm$^3$ the inorganic fibers include at least one selected from the group consisting of alumina fibers, silica fibers, alumina-silica fibers, mullite fibers, glass fibers, and bio-soluble fibers.

The method for producing a papermaking mat of the present invention includes papermaking from inorganic fibers obtained by subjecting an inorganic fiber molded body to fiber opening in water.

In fiber opening of the inorganic fiber molded body, there are cases where the inorganic fibers are not completely opened, resulting in fiber bundles of 10 or more fibers entangled and twisted together.

In the method for producing a papermaking mat of the present invention, such fiber bundles are intentionally generated.

The bulk specific gravity in water of the inorganic fibers contained in the slurry can be adjusted to 0.012 to 0.035 g/cm$^3$ by allowing such fiber bundles to be generated in a predetermined amount.

A papermaking mat produced by such a method is less likely to crack even when wound around a base material and has a sufficiently high surface pressure.

In the method for producing a papermaking mat of the present invention, preferably, the inorganic fiber molded body includes at least one of a first inorganic fiber molded body derived from a needle-punched mat or a second inorganic fiber molded body derived from a papermaking mat.

First fiber bundles can be formed in the fiber opening step regardless of whether the inorganic fiber molded body is derived from a needle-punched mat or a papermaking mat.

- Advantageous Effects of Invention

The present invention can provide a papermaking mat that is less likely to crack even when wound around a base material and that has a sufficiently high surface pressure.

BRIEF DESCRIPTION OF DRAWINGS

FIG. 1A is a schematic perspective view of an example of a papermaking mat of the present invention.
FIG. 1B is an enlarged view of a portion encircled by a broken line in FIG. 1A.
FIG. 2 is a schematic view of an example of a crimped fiber bundle.
FIG. 3 is a schematic cross-sectional view of an example of an exhaust gas conversion apparatus in the present invention.

A papermaking mat according to the present invention is described with reference to the drawings.

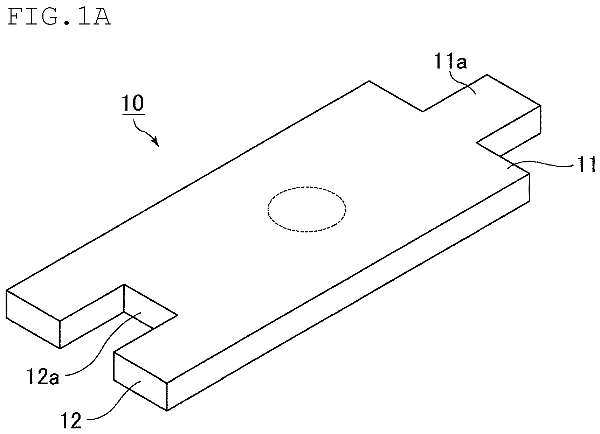

FIG. 1A is a schematic perspective view of an example of the papermaking mat of the present invention.

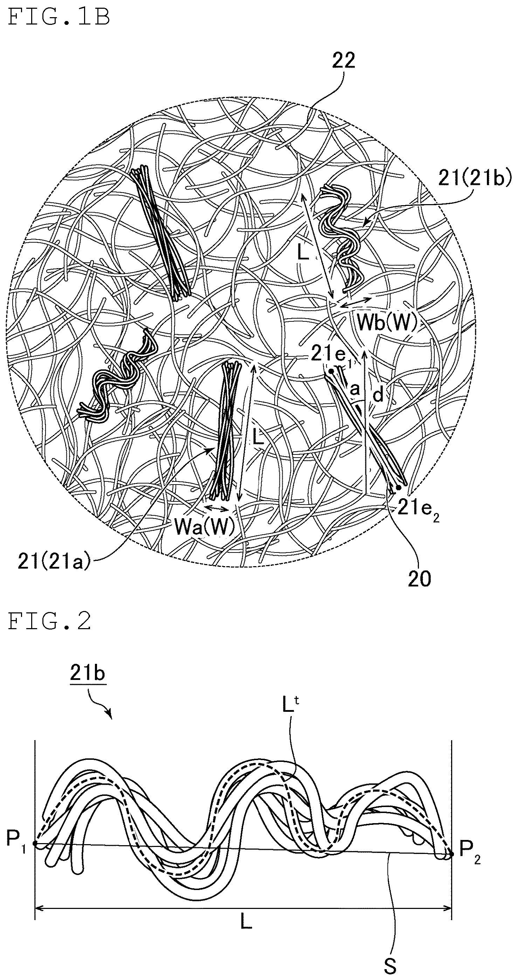

FIG. 1B is an enlarged view of a portion encircled by a broken line in FIG. 1A.
As shown in FIG. 1A, a papermaking mat 10 is a papermaking mat made of inorganic fibers.
The papermaking mat 10 has a rectangular shape in a plan view, with a protrusion 11a at one end 11 and a recess 12a at another end 12.
The papermaking mat 10 is wound around an exhaust gas treatment unit and disposed in an exhaust gas conversion apparatus, which is described in detail later.
The protrusion 11a and the recess 12a have shapes that are exactly fitted to each other when the papermaking mat 10 is wound around the exhaust gas treatment unit.
The protrusion 11a and the recess 12a, when provided, improve sealing properties when the papermaking mat 10 is disposed in the exhaust gas conversion apparatus described later.
The papermaking mat of the present invention may not include either a protrusion or a recess at the ends.
As shown in FIG. 1B, the papermaking mat 10 includes fiber bundles 21 each formed from 10 or more inorganic fibers 20 entangled in a twist manner, and inorganic fibers 22 forming no fiber bundles 21.
The fiber bundles 21 include a straight fiber bundle (a bundle in a state denoted by a reference sign "21a" in FIG. 1B) and a crimped fiber bundle (a bundle in a state denoted by a reference sign "21b" in FIG. 1B).
The term "fiber bundle" as used herein refers to a portion where the inorganic fibers are concentrated and entangled at a higher density than they are in other portions of the papermaking mat.
Here, a crimped fiber bundle 21b is described with reference to the drawing.
FIG. 2 is a schematic view of an example of a crimped fiber bundle.
In the crimped fiber bundle 21b shown in FIG. 2, preferably, a trace length $L^t$ of the crimped fiber bundle 21b measured by a trace length measurement method described below is greater than a length L of the crimped fiber bundle 21b by preferably 0.1 mm or more, more preferably 0.2 to 0.6 mm.

(Trace length measurement method)

The crimped fiber bundle 21b is placed still on a flat surface.
Next, the crimped fiber bundle 21b placed still is traced therealong from one end $P_1$ to another end $P_2$ of the crimped fiber bundle 21b viewed from above, and the traced distance $L^t$ is defined as "the trace length of the crimped fiber bundle".
When the trace length $L^t$ of the crimped fiber bundle 21b is greater than the length L of the crimped fiber bundle 21b, the crimped fiber bundle 21b has a high elasticity, increasing the surface pressure of the papermaking mat 10.
Preferably, in the papermaking mat 10, the crimped fiber bundle 21b shown in FIG. 2 includes a crimped fiber bundle 21b in which a line segment S interconnecting the end $P_1$ and the end $P_2$ is crossed two or more times during tracing of the crimped fiber bundle 21b in measuring the "trace length of the crimped fiber bundle".
The degree of crimp of such a crimped fiber bundle 21b is suitable, increasing the elasticity of the crimped fiber bundle 21b and improving the surface pressure of the papermaking mat 10.
In the papermaking mat 10, the ratio of the trace length $L^t$ of the crimped fiber bundle 21b to the length L of the crimped fiber bundle 21b is preferably as follows: $L^t/L$ = 1.1 to 1.6.
In the papermaking mat 10, the value of the following formula (1) is preferably 0.1 or more, more preferably 0.2 to 0.6.

$$(L^t - L)/Wb \quad (1)$$

"Wb" means the width of the crimped fiber bundle 21b.
In the papermaking mat 10, preferably, the area of the crimped fiber bundle 21b placed still and viewed from the above is 2.6 to 8.3 $mm^2$.

In the papermaking mat 10, the percentage of the number of the crimped fiber bundles 21b within the fiber bundles 21 is preferably 85% or less, more preferably 60% or less, still more preferably 30% or less, yet still more preferably 10 to 30%.

The fiber bundles 21 are not easily deformed by pressure because they are formed from multiple inorganic fibers 20 entangled and support each other. Therefore, when a pressure is applied to the papermaking mat 10, the fiber bundles 21 serve as cores and can reduce the pressure applied to the inorganic fibers 22 forming no fiber bundles. This makes it possible to prevent the inorganic fibers 22 forming no fiber bundles 21 from being broken by pressure. As a result, the papermaking mat 10 has a high surface pressure.

The papermaking mat 10 includes the fiber bundles 21. Thus, when the papermaking mat 10 is subjected to fiber opening by the fiber opening method described below, the fiber bundles are not opened and remain as they are. In the slurry after fiber opening, the density of the inorganic fibers at a portion including fiber bundles is higher than that at a portion including no fiber bundles.

Fiber opening method for papermaking mats:

A papermaking mat is heat-treated at 600°C for one hour;

5.0 g of fibers is weighed out from the papermaking mat while loosening the fibers, and the fibers are put in a container holding 400 cc of water;
the fibers are stirred using a stirrer (product name: SMT-101, manufacturer: AS ONE Corporation) at a rotation speed of 1000 rpm for 10 minutes and then transferred to a graduated cylinder container, and water is added to make a total volume of 500 cc; and
after standing for 30 minutes, the height of settled fibers is read, and the bulk specific gravity in water is calculated using the following calculation formula (1):

$$\text{bulk specific gravity in water (g/cm}^3\text{)} = 5.0\text{ (g)/volume of settled fibers (cm}^3\text{)}. \qquad (1)$$

When the papermaking mat 10 is subjected to fiber opening by the above fiber opening method for papermaking mats to obtain a slurry containing inorganic fibers, the bulk specific gravity in water of the inorganic fibers contained in the slurry is 0.012 to 0.035 g/cm$^3$. More preferably, the bulk specific gravity in water of the inorganic fibers contained in the slurry is 0.014 to 0.028 g/cm$^3$.

That the bulk specific gravity in water of the inorganic fibers contained in the slurry after fiber opening is 0.012 to 0.035 g/cm$^3$ means that the proportion of the fiber bundles contained in the papermaking mat 10 is appropriate, and the effect of preventing the inorganic fibers 22 forming no fiber bundles 21 from being broken by pressure can be suitably exerted.

When the bulk specific gravity in water of the inorganic fibers contained in the slurry after fiber opening is less than 0.012 g/cm$^3$, the proportion of the fiber bundles contained in the papermaking mat is low, reducing the surface pressure of the papermaking mat.

When the bulk specific gravity in water of the inorganic fibers contained in the slurry after fiber opening is more than 0.035 g/cm$^3$, the proportion of the fiber bundles contained in the papermaking mat is high, reducing the flexibility of the papermaking mat.

In the papermaking mat 10, the average length (the average of lengths denoted by reference signs L in FIG. 1B) of the fiber bundles 21 each formed from 10 or more of the inorganic fibers 20 is more than 5 mm. The average length of the fiber bundles 21 is preferably more than 5 mm but not more than 15 mm, more preferably 7 to 13 mm.

The papermaking mat 10 is produced by flowing a slurry containing inorganic fibers in a certain direction and scooping up the inorganic fibers, as described in detail later.

When the slurry contains the fiber bundles 21 each formed from 10 or more of the inorganic fibers entangled and each having an average length of more than 5 mm, the papermaking mat 10 to be produced will also include such fiber bundles 21.

Flowing the slurry containing the fiber bundles 21 in a certain direction causes the fiber bundles 21 to be caught by other inorganic fibers (20, 22) and easily oriented in a direction perpendicular to the flowing direction of the slurry.

The fiber bundle 21 is stronger and harder to bend than a single inorganic fiber 22. Therefore, while the papermaking mat 10 including the fiber bundles 21 oriented in one direction is hard to bend in the direction in which the fiber bundles 21 are oriented, the papermaking mat 10 is easy to bend in the direction perpendicular to the direction in which the fiber bundles 21 are oriented.

Thus, even when the papermaking mat 10 is bent in the direction perpendicular to the direction in which the fiber bundles 21 are oriented, such bending is less likely to produce stress. In addition, such stress is less likely to cause

cracking.

Therefore, the papermaking mat 10 is less likely to crack even when wound around a base material.

When the fiber bundles have an average length of 5 mm or less, such fiber bundles are too short and are thus less likely to serve as cores to alleviate the pressure applied to the inorganic fibers forming no fiber bundles.

When the fiber bundles have an average length of more than 15 mm, such fiber bundles are too long and are thus easy to bend when a pressure is applied to their lateral sides. Thus, such fiber bundles are less likely to serve as cores. In addition, such fiber bundles are easily breakable when the papermaking mat is bent. When a fiber bundle breaks, a crack easily develops from the broken point in the papermaking mat.

In the papermaking mat 10, the average width (the average of lengths denoted by reference signs W in FIG. 1B) of the fiber bundles 21 each formed from 10 or more of the inorganic fibers 20 is preferably 0.2 to 1.0 mm, more preferably 0.2 to 0.8 mm.

As shown in FIG. 1B, when the fiber bundle 21 is a straight fiber bundle 21a, its maximum width (the length denoted by a reference sign Wa FIG. 1B) is the width of the fiber bundle 21. Likewise, when the fiber bundle 21 is a crimped fiber bundle 21b, its maximum width (the length denoted by a reference sign Wb in FIG. 1B) is the width of the fiber bundle 21.

When the fiber bundles have an average width of less than 0.2 mm, such fiber bundles are low in strength and easy to bend. Thus, the fiber bundles are less likely to serve as cores.

When the fiber bundles have an average width of more than 1.0 mm, such fiber bundles are too high in strength, resulting in a low flexibility of the entire papermaking mat.

The average length of the fiber bundles each formed from 10 or more of the inorganic fibers entangled and the average width of the fiber bundles each formed from 10 or more of the inorganic fibers entangled refer to values measured as described below.

The papermaking mat is cut into a 150 $cm^3$ test piece.

Subsequently, the test piece is fired at 600°C for one hour to thermally decompose binder components.

Next, the test piece is placed in a container, and the container is shaken vertically and horizontally to loosen the inorganic fibers constituting the test piece.

A fiber bundle formed from 10 or more of the inorganic fibers entangled is taken out from the loosened test piece, and the length and width of the fiber bundle are measured.

The same procedure is repeated three times, and the average length and the average width of the obtained fiber bundles are calculated.

In calculating the average length and the average width of the fiber bundles, the fiber bundles each formed from less than 10 inorganic fibers are excluded from the calculation.

In the papermaking mat 10, preferably, the fiber bundles 21 are oriented in one direction.

In the case where the fiber bundles 21 are oriented in one direction, even when the papermaking mat 10 is bent in the direction perpendicular to the direction in which the fiber bundles 21 are oriented, such bending is less likely to produce stress. In addition, such stress is less likely to cause cracking.

Therefore, the papermaking mat 10 is less likely to crack even when wound around a base material.

Whether the fiber bundles 21 are oriented in one direction is determined by the following method.

First, as shown in FIG. 1B, a segment connecting one end $21e_1$ to another end $21e_2$ of a fiber bundle 21 is drawn on a first main surface of the papermaking mat 10. Next, the degree of an acute angle a formed between the segment and a direction d is measured. When the degree is 0° to 45°, the fiber bundle 21 from which the segment is derived is regarded as the fiber bundle 21 oriented in the direction d.

In an area of 5 cm (vertical) × 5 cm (horizontal) on the first main surface of the papermaking mat 10, when the fiber bundles 21 oriented in the direction d account for 50% or more of the entire fiber bundles 21, it is determined that the entire fiber bundles 21 are oriented in the direction d.

When the fiber bundles 21 are in the above state, it is determined that "the fiber bundles are oriented in one direction" in the papermaking mat.

As described above, in the papermaking step in the production of the papermaking mat 10, flowing the slurry containing the fiber bundles 21 in a certain direction causes the fiber bundles 21 to be caught by other inorganic fibers (20, 22) and easily oriented in a direction perpendicular to the flowing direction of the slurry.

Such a phenomenon in which the fiber bundles 21 are oriented in a direction perpendicular to the flow direction of the slurry occurs in the entire thickness direction of the papermaking mat 10. Therefore, when the fiber bundles 21 are oriented in one direction on the main surface of the papermaking mat 10, the fiber bundles 21 can be determined as being oriented in one direction in the entire papermaking mat 10.

The inorganic fibers 20 constituting the papermaking mat 10 include at least one selected from the group consisting of alumina fibers, silica fibers, alumina-silica fibers, mullite fibers, glass fibers, and bio-soluble fibers.

The papermaking mat 10 including these inorganic fibers has a sufficient heat resistance.

Preferably, the inorganic fibers 20 constituting the papermaking mat 10 have an average fiber diameter of 3 to 50

μm and an average fiber length of 100 to 100000 μm.

Preferably, the bulk density of the papermaking mat 10 is 0.05 to 0.30 g/cm$^3$.

When the bulk density of the papermaking mat 10 is less than 0.05 g/cm$^3$, the entanglement of the inorganic fibers is weak, and the inorganic fibers are easily separated from each other, making it difficult to maintain the shape of the papermaking mat in a predetermined shape.

When the bulk density of the papermaking mat 10 is more than 0.30 g/cm$^3$, the papermaking mat is hard with poor winding properties and is prone to tearing.

The papermaking mat 10 contains an organic binder in an amount of preferably 0.1 to 20 parts by weight, more preferably 0.5 to 10 parts by weight, per 100 parts by weight of the inorganic fibers 20.

The papermaking mat 10 also contains an inorganic binder in an amount of preferably 0.1 to 10 parts by weight, more preferably 0.5 to 3.0 parts by weight, per 100 parts by weight of the inorganic fibers 20.

The organic binder and the inorganic binder bond the inorganic fibers to each other and maintain the shape of the papermaking mat.

When the amounts of the organic binder and the inorganic binder are in the above ranges, adhesion between the inorganic fibers is appropriate, and both flexibility and shape maintainability of the papermaking mat can be achieved.

In addition, falling off of the inorganic fibers from the papermaking mat and scattering of the inorganic fibers can be reduced or prevented.

In the papermaking mat 10, the glass transition temperature Tg of the organic binder is preferably 5°C or lower, more preferably -35 to 5°C.

When the glass transition temperature Tg of the organic binder is 5°C or lower, an organic binder film formed of the organic binder has high strength, and a papermaking mat having high film elongation and excellent flexibility can be obtained.

The papermaking mat 10 also becomes less prone to tearing when being wound around an exhaust gas treatment unit, for example. Further, the resulting organic binder film is not too hard, so that it exhibits an effect of keeping the inorganic fibers connected to each other at breakage of the inorganic fibers and can reduce or prevent the inorganic fibers from scattering.

When the glass transition temperature Tg of the organic binder is higher than 5°C, the resulting papermaking mat may have a low flexibility and a low degree of breaking elongation.

In the papermaking mat of the present invention, the organic binder may be a water-soluble organic polymer, a thermoplastic resin, or a thermosetting resin.

Examples of the water-soluble organic polymer include acrylic resins, acrylate latexes, rubber latexes, carboxymethyl cellulose, and polyvinyl alcohol. Examples of the thermoplastic resin include styrene resins. Examples of the thermosetting resin include epoxy resins.

In the papermaking mat 10, preferably, the inorganic binder contains at least one selected from the group consisting of alumina, silica, silicon carbide, zirconia, boron nitride, diamond, and pumice.

These organic binders and inorganic binders are suitable for bonding the inorganic fibers to each other and maintaining the shape of the papermaking mat.

Next, a method for producing a papermaking mat of the present invention is described.

The method for producing a papermaking mat of the present invention includes (1) fiber opening step and (2) papermaking step.

In the following, a description is given on a case where both a first inorganic fiber molded body derived from a needle-punched mat and a second inorganic fiber molded body derived from a papermaking mat are used as inorganic fiber molded bodies. Yet, the method for producing a papermaking mat of the present invention may use either one of the inorganic fiber molded bodies.

Each step is described in detail below.

(1) Fiber opening step

In this step, a first inorganic fiber molded body derived from a needle-punched mat and a second inorganic fiber molded body derived from a papermaking mat are subjected to fiber opening in water to produce a slurry containing inorganic fibers that are opened.

In this step, fiber opening is performed such that the bulk specific gravity in water of the inorganic fibers contained in the slurry is 0.012 to 0.035 g/cm$^3$.

Preferably, dry-type fiber opening in water is not performed in this step.

In fiber opening of a needle-punched mat and a papermaking mat, there are cases where the inorganic fibers are not completely opened, resulting in fiber bundles of multiple fibers entangled.

The reason why such fiber bundles are generated is described below.

When producing a needle-punched mat, the inorganic fibers are entangled with each other with a needle, so that

the inorganic fibers are highly entangled with each other at the needle-punched portion.

When producing a papermaking mat, the inorganic fibers are bonded to each other with an organic binder, so that the inorganic fibers are less likely to be separated from each other. When producing a papermaking mat by a papermaking method, unevenness occurs in aggregates of the inorganic fibers, forming a dense inorganic fiber aggregate.

In fiber opening of the first inorganic fiber molded body derived from a needle-punched mat and the second inorganic fiber molded body derived from a papermaking mat, the portion in which the inorganic fibers are entangled with each other with a needle in a needle-punched mat and the portion in which the inorganic fibers aggregated at a high density in a papermaking mat are not easily opened and remain as fiber bundles formed from the inorganic fibers entangled and twisted together.

In the method for producing a papermaking mat of the present invention, such fiber bundles are intentionally generated.

In other words, in the method for producing a papermaking mat of the present invention, fiber opening is performed such that fiber bundles are formed and that the fiber bundles have an average length of more than 5 mm.

The bulk specific gravity in water of the inorganic fibers contained in the slurry can be adjusted to 0.012 to 0.035 g/cm$^3$ by allowing such fiber bundles to be generated in a predetermined amount.

The bulk specific gravity in water of the inorganic fibers contained in the slurry can be measured by the following method.

First, the slurry is completely dried, and 5.0 g of fibers is weighed out from the dried slurry while loosening the fibers, and the fibers are put in a container holding 400 cc of water.

Next, the fibers are stirred at a rotation speed of 1000 rpm for 10 minutes and then transferred to a graduated cylinder container, and water is added to make a total volume of 500 cc.

After standing for 30 minutes, the height of settled fibers is read, and the bulk specific gravity in water is calculated using the following calculation formula (1):

$$\text{bulk specific gravity in water (g/cm}^3\text{)} = 5.0\ \text{(g)/volume of settled fibers (cm}^3\text{)} \quad (1)$$

Preferably, the fiber bundles contained in the slurry are each formed from 10 or more of the inorganic fibers entangled and have an average length of 5 to 15 mm and an average width of 0.2 to 1.0 mm.

The fiber opening conditions are not limited. For example, in the case of fiber opening in water using a stirrer, the bulk specific gravity in water of the inorganic fibers contained in the slurry can be adjusted to 0.012 to 0.035 g/cm$^3$ by adjusting the rotation speed of the stirrer and the stirring time. The average length and the average width of the fiber bundles can also be adjusted by adjusting the rotation speed of the stirrer and the stirring time.

Preferably, the fiber bundles to be generated in this step are derived from needle marks of the first inorganic fiber molded body.

When producing a needle-punched mat, inorganic fibers are entangled by needle-punching. When such a needle-punched mat is subjected to fiber opening in water, inorganic fibers can be obtained which include fiber bundles of multiple fibers entangled. These fiber bundles are crimped fiber bundles.

The bulk specific gravity in water of the inorganic fibers contained in the slurry can be easily adjusted to 0.012 to 0.035 g/cm$^3$ by adjusting needle-punching conditions.

In other words, the papermaking mat of the present invention can be easily produced through a step of subjecting a predetermined needle-punched mat to fiber opening.

Examples of the fiber opening include the following methods.

First, the first inorganic fiber molded body and the second inorganic fiber molded body are fired at 500°C to 1200°C for 0.5 to 10.0 hours. A preferred firing temperature is 800°C to 950°C.

Thus, the organic binders in the first inorganic fiber molded body and the second inorganic fiber molded body can be thermally decomposed, facilitating fiber opening of the first inorganic fiber molded body and the second inorganic fiber molded body.

Next, the fired first inorganic fiber molded body and the fired second inorganic fiber molded body are left standing until cooled to room temperature. Then, the first inorganic fiber molded body and the second inorganic fiber molded body are loosened by hand.

Next, the first inorganic fiber molded body and the second inorganic fiber molded body are put in water and stirred for fiber opening, with the amount of water being 50 to 400 times (in weight ratio) the amount of the first inorganic fiber molded body and the second inorganic fiber molded body. Thus, a slurry containing inorganic fibers is produced.

Preferably, stirring conditions are suitably set. For example, in the case of producing 10 L of a slurry, stirring is preferably performed using a stirrer (product name: SMT-101, manufacturer: AS ONE Corporation) at a rotation speed of 500 to 1000 rpm for a stirring time of 200 to 900 seconds. Preferably, the rotation speed is 650 to 850 rpm and the stirring time is 500 to 700 seconds. More preferably, the rotation speed is 700 to 800 rpm and the stirring time is 500 to 650

seconds.

Thereby, the bulk specific gravity in water of the inorganic fibers contained in the slurry can be adjusted to 0.012 to 0.035 g/cm$^3$ and the average length of the fiber bundles can be adjusted to exceed 5 mm.

Next, an organic binder and an inorganic binder are added to the slurry.

The organic binder is added such that its amount in a papermaking mat to be produced is preferably 0.1 to 20 parts by weight, more preferably 0.5 to 15.0 parts by weight, per 100 parts by weight of the inorganic fibers.

The inorganic binder is added such that its amount in a papermaking mat to be produced is preferably 0.1 to 15.0 parts by weight, more preferably 0.5 to 10 parts by weight, per 100 parts by weight of the inorganic fibers.

Since the types of preferred organic binders and inorganic binders have already been described, a description thereof is omitted here.

(2) Papermaking step

Next, the slurry is poured into a molding machine having a mesh for filtering on its bottom to remove a solvent in the slurry, whereby an inorganic fiber aggregate is obtained. Then, the inorganic fiber aggregate is dehydrated and dried.

In the papermaking step, the inorganic fiber aggregate may be dried by thermal compression. During thermal compression, the inorganic fiber aggregate may be heat-treated for drying by passing hot air therethrough or may be in a wet state without being heat-treated.

In the heat treatment, if performed, the heating temperature and the hot air temperature are preferably 100°C to 250°C in order to prevent thermal deterioration of the organic binder. In the range of 100°C to 250°C, it is possible to remove the water content from the inorganic fiber aggregate while preventing deterioration of the organic binder. When the heating temperature and the hot air temperature are lower than 100°C, the temperature does not transfer to a central portion of the inorganic fiber aggregate, resulting in a longer drying time. When the heating temperature and the hot air temperature are higher than 250°C, the organic binder is deteriorated, and the binding force between fibers is reduced, making it difficult to control the thickness of the inorganic fiber aggregate.

The papermaking mat of the present invention can be produced through the above steps.

New fiber bundles are not generated in the papermaking step. Thus, when the papermaking mat obtained is subjected to fiber opening by the fiber opening method for papermaking mats described above to obtain a slurry containing inorganic fibers, the inorganic fibers contained in the slurry have a bulk specific gravity in water of 0.012 to 0.035 g/cm$^3$.

In the method for producing a papermaking mat of the present invention, preferably, batchwise papermaking or continuous papermaking is performed in the papermaking step.

Batchwise papermaking or continuous papermaking facilitates production of the papermaking mat of the present invention.

The papermaking mat of the present invention includes, as one embodiment, a papermaking mat produced by a fiber opening step of subjecting an inorganic fiber molded body consisting of an aggregate of inorganic fibers to fiber opening in water and producing a slurry containing fiber bundles each formed from 10 or more of the inorganic fibers entangled and twisted together, the inorganic fibers including inorganic fibers forming no fiber bundles; and a papermaking step of papermaking from the slurry to obtain a papermaking mat, wherein in the fiber opening step, fiber opening is performed such that the fiber bundles have an average length of more than 5 mm and that the inorganic fibers in the slurry have a bulk specific gravity in water of 0.012 to 0.035 g/cm$^3$.

Next, a method for using the papermaking mat of the present invention is described.

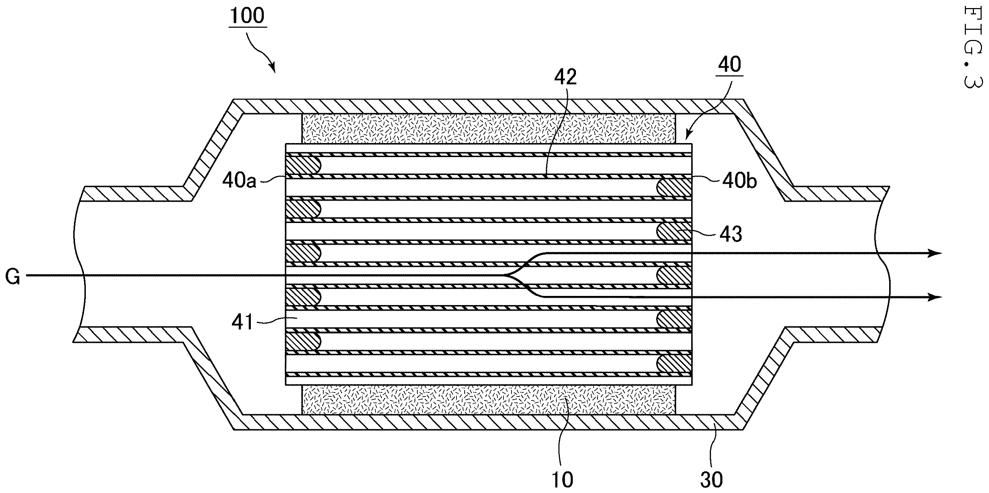

FIG. 3 is a schematic cross-sectional view of an example of the exhaust gas conversion apparatus in the present invention.

As shown in FIG. 3, an exhaust gas conversion apparatus 100 includes a metal casing 30, an exhaust gas treatment unit 40 housed in the metal casing 30, and the papermaking mat 10 between the exhaust gas treatment unit 40 and the metal casing 30. The papermaking mat 10 is the papermaking mat of the present invention.

The exhaust gas treatment unit 40 has a pillar shape in which many cells 41 are arranged in parallel in a longitudinal direction with a cell wall 42 between the cells. If necessary, an inlet tube for introducing exhaust gas discharged from an internal combustion engine and an outlet tube for discharging the exhaust gas that has passed through the exhaust gas conversion apparatus are connected to ends of the casing 30.

In the exhaust gas conversion apparatus 100 shown in FIG. 3, although the exhaust gas treatment unit 40 is an exhaust gas filter (honeycomb filter) in which one of the ends of each cell is plugged with a plug 43, the exhaust gas treatment unit 40 may be a catalyst carrier not plugged with plugs at either end surface.

As shown in FIG. 3, the exhaust gas that was discharged from the internal combustion engine and that flowed into the exhaust gas conversion apparatus 100 (in FIG. 3, the exhaust gas is denoted by G, and the exhaust gas flow is indicated by arrows) flows into one of the cells 41 open at an exhaust gas inlet-side end 40a of the exhaust gas treatment unit (honeycomb filter) 40, and then passes through the cell wall 42 between the cells 41. At this point, PM in the exhaust gas is collected by the cell wall 42, and the exhaust gas is converted. The converted exhaust gas flows out from another cell

41 open at an exhaust gas discharge-side end 40b and is discharged to the outside.

As described above, the papermaking mat 10 has a high surface pressure. Therefore, in the exhaust gas conversion apparatus 100, even when the exhaust gas treatment unit 40 is exposed to high pressure from the exhaust gas, falling off of the exhaust gas treatment unit 40 from the metal casing 30 can be prevented.

The exhaust gas treatment unit 40 may include a porous non-oxide ceramic such as silicon carbide or silicon nitride or may include a porous oxide ceramic such as SiAlON, alumina, cordierite, or mullite. Silicon carbide is preferred among these.

When the exhaust gas treatment unit 40 is a silicon carbide porous ceramic, the porosity of the porous ceramic is not limited but is preferably 35 to 60%.

When the porosity is less than 35%, the exhaust gas treatment unit may be quickly clogged. In contrast, when the porosity is more than 60%, the exhaust gas treatment unit may have low strength and easily break.

Preferably, the porous ceramic has an average pore size of 5 to 30 $\mu$m.

When the average pore size is less than 5 $\mu$m, clogging with PM may easily occur.

When the average pore size is more than 30 $\mu$m, the exhaust gas treatment unit may not function as a filter because PM passes through the pores and cannot be collected.

The porosity and the pore size can be measured by a conventionally known method for measurement using a scanning electron microscope (SEM).

The cell density on a cross section of the exhaust gas treatment unit 40 is not limited, but a preferred lower limit is 31.0 pcs/cm$^2$ (200 pcs/inch$^2$) and a preferred upper limit is 93.0 pcs/cm$^2$ (600 pcs/inch$^2$). A more preferred lower limit is 38.8 pcs/cm$^2$ (250 pcs/inch$^2$) and a more preferred upper limit is 77.5 pcs/cm$^2$ (500 pcs/inch$^2$) .

The exhaust gas treatment unit 40 may support a catalyst for converting the exhaust gas. Preferred examples of the catalyst to be supported include noble metals such as platinum, palladium, and rhodium, with platinum being more preferred. As another catalyst, for example, an alkali metal such as potassium or sodium, or an alkaline earth metal such as barium can also be used. These catalysts may be used alone or in combination of two or more thereof.

These catalysts, when supported, facilitate removal of PM by combustion and enable conversion of toxic exhaust gas.

(Metal casing)

The metal casing 30 has a substantially cylindrical shape.

Preferably, the inner diameter of the metal casing 30 (inner diameter of a portion for housing the exhaust gas treatment unit) is slightly smaller than the diameter of the exhaust gas treatment unit 40 around which the papermaking mat 10 is wound.

The metal casing 30 is preferably made of stainless steel, although not limited thereto.

## EXAMPLES

The following describes Examples that more specifically disclose the present invention. The present invention is not limited to these Examples.

(Example 1)

A first inorganic fiber molded body derived from a needle-punched mat was prepared. The first inorganic fiber molded body was made of alumina-silica fibers having a $Al_2O_3$:$SiO_2$ ratio of 72:28 (weight ratio) and had a bulk density of 0.17 g/mm$^3$ and a needle mark density of 21 pcs/cm$^2$.

Also, a second inorganic fiber molded body derived from a papermaking mat was prepared. The second inorganic fiber molded body was made of alumina-silica fibers having a $Al_2O_3$:$SiO_2$ ratio of 72:28 (weight ratio) and had a bulk density of 1.2 g/mm$^3$.

Next, the first inorganic fiber molded body and the second inorganic fiber molded body were fired at 800°C for one hour to thermally decompose organic binders in the first inorganic fiber molded body and the second inorganic fiber molded body.

Next, the fired first inorganic fiber molded body and the fired second inorganic fiber molded body were left standing until cooled to room temperature. Then, the first inorganic fiber molded body and the second inorganic fiber molded body were loosened by hand.

Next, 5.0 g of the first inorganic fiber molded body and 5.0 g of the second inorganic fiber molded body were taken out and put in 0.4 L water. Subsequently, fiber opening was performed by stirring using a stirrer (product name: SMT-101, manufacturer: AS ONE Corporation) at a rotation speed of 1000 rpm for a stirring time of 10 minutes, whereby a slurry of inorganic fibers was produced.

A part of the slurry was taken out and dried in order to check for formation of fiber bundles in the slurry. The slurry was found to have formed fiber bundles of 10 or more of the inorganic fibers entangled and twisted together.

Next, an organic binder was added to the slurry such that the amount of the organic binder was 0.5 to 10 parts by weight per 100 parts by weight of the inorganic fibers.

In addition, an inorganic binder was added to the slurry such that the amount of the inorganic binder was 0.3 to 3.0 parts by weight per 100 parts by weight of the inorganic fibers.

Next, the slurry was poured into a molding machine having a mesh for filtering on its bottom to remove a solvent in the slurry, whereby an inorganic fiber aggregate was obtained. Subsequently, the inorganic fiber aggregate was dehydrated and dried at 150°C to 210°C for five minutes to one hour, whereby a papermaking mat according to Example 1 was produced. The papermaking mat according to Example 1 had a thickness of 13 mm.

(Comparative Example 1)

A papermaking mat according to Comparative Example 1 was produced as in Example, except that the first inorganic fiber molded body and the second inorganic fiber molded body were subjected to fiber opening by sufficiently loosening by hand without using a stirrer.

The papermaking mat according to Comparative Example 1 had a thickness of 12.9 mm.

(Measurement of bulk specific gravity in water)

The papermaking mats according to Example 1 and Comparative Example 1 were heat-treated at 600°C for one hour.

Subsequently, 5.0 g of fibers was weighed out while loosening the fibers, and the fibers were put in a container holding 400 cc of water.

The fibers were stirred at a rotation speed of 1000 rpm for 10 minutes and then transferred to a graduated cylinder container, and water was added to make a total volume of 500 cc.

After standing for 30 minutes, the height of settled fibers was read, and the bulk specific gravity in water was calculated using the following calculation formula (1). Table 1 shows the results.

$$\text{Bulk specific gravity in water (g/cm}^3\text{)} = 5.0\text{ (g)/volume of settled fibers (cm}^3\text{)} \quad (1)$$

[Table 1]

| | Average length of fiber bundles (mm) | Average width of fiber bundles (mm) | Bulk specific gravity in water of inorganic fibers in fiber opening of papermaking mat (g/cm$^3$) | Surface pressure (kPa) | Winding properties |
|---|---|---|---|---|---|
| Example 1 | 8 | 0.398 | 0.031 | 86.8 | Good |
| Comparative Example 1 | 20 | 0.370 | 0.010 | 79.2 | Bad |

(Fiber bundle observation)

The papermaking mats according to Example 1 and Comparative Example 1 were cut into 150 cm$^3$ test pieces.

Subsequently, the test pieces were fired at 600°C for one hour to thermally decompose binder components.

Next, the test pieces were placed in containers, and the containers were shaken vertically and horizontally to loosen the inorganic fibers constituting the test pieces.

Fiber bundle each formed from 10 or more of the inorganic fibers entangled and twisted together were taken out from each loosened test piece, and the length of the fiber bundle and the width of the fiber bundle were measured.

The same procedure was repeated three times, and the average length and the average width of the fiber bundles were calculated.

Table 1 shows the results.

(Surface pressure measurement)

The papermaking mats according to Example 1 and Comparative Example 1 were set in a tester (product name:

SMT-101, manufacturer: AS ONE Corporation) and compressed at a speed of 25.4 mm/min to a gap bulk density (GBD) of 0.40 $mm^3/g$. These papermaking mats were maintained with a gap bulk density (GBD) of 0.40 $mm^3/g$ for 10 minutes.

Subsequently, the surface pressure of each papermaking mat was measured. Table 1 shows the results.

(Evaluation of winding properties)

The papermaking mats according to Example 1 and Comparative Example 1 were each cut into a test piece of a rectangular shape having a length of 350 mm in a long side direction and a length of 30 mm in a short side direction. cutting was performed such that the long side direction of the test piece matched the direction in which the slurry was poured into the molding machine in the papermaking step in the production of the papermaking mat.

Next, a cylinder having a diameter of 100 mm was prepared, and each test piece was wound around the cylinder such that the long side direction of the test piece matched the winding direction. Then, whether each test piece was cracked was visually observed. Evaluation criteria are as follows. Table 1 shows the results.

good: No cracking was observed.
bad: Cracking was observed.

As shown in Table 1, it was found that the papermaking mat according to Example 1 had a high surface pressure and was less likely to crack even when wound around a base material.

REFERENCE SIGNS LIST

10 papermaking mat
11 one end
11a protrusion
12 another end
12a recess
20 inorganic fiber
21 fiber bundle
21a straight fiber bundle
21b crimped fiber bundle
22 inorganic fiber forming no fiber bundle
30 metal casing
40 exhaust gas treatment unit
40a exhaust gas inlet-side end
40b exhaust gas discharge-side end
41 cell
42 cell wall
43 plug
100 exhaust gas conversion apparatus

**Claims**

**1.** A papermaking mat comprising:

inorganic fibers including

inorganic fibers forming fiber bundles each formed from 10 or more of the inorganic fibers entangled and twisted together, and
inorganic fibers forming no fiber bundles;

wherein the fiber bundles have an average length of more than 5 mm,
the inorganic fibers include at least one selected from the group consisting of alumina fibers, silica fibers, alumina-silica fibers, mullite fibers, glass fibers, and bio-soluble fibers, and
when the papermaking mat is subjected to fiber opening by a fiber opening method for papermaking mats described below to obtain a slurry containing the inorganic fibers, the inorganic fibers in the slurry have a bulk

specific gravity in water of 0.012 to 0.035 $g/cm^3$,

fiber opening method for papermaking mats:

a papermaking mat is heat-treated at 600°C for one hour;
5.0 g of fibers is weighed out from the papermaking mat while loosening the fibers, and the fibers are put in a container holding 400 cc of water;
the fibers are stirred using a stirrer at a rotation speed of 1000 rpm for 10 minutes and then transferred to a graduated cylinder container, and water is added to make a total volume of 500 cc; and
after standing for 30 minutes, the height of settled fibers is read, and the bulk specific gravity in water is calculated using the following calculation formula (1):

bulk specific gravity in water ($g/cm^3$) = 5.0 (g)/volume of settled fibers ($cm^3$) (1). (1)

**2.** The papermaking mat according to claim 1,
wherein the papermaking mat contains an organic binder in an amount of 0.1 to 20 parts by weight and an inorganic binder in an amount of 0.1 to 10 parts by weight per 100 parts by weight of the inorganic fibers.

**3.** The papermaking mat according to claim 2,
wherein the organic binder has a glass transition temperature Tg of 5°C or lower.

**4.** The papermaking mat according to claim 2 or 3,
wherein the organic binder is at least one selected from the group consisting of: acrylic resins, acrylate latices, rubber latices, carboxymethyl cellulose and polyvinyl alcohol, all of which act as water-soluble organic polymers; styrene resins that act as a thermoplastic resin; and epoxy resins that act as a thermosetting resin.

**5.** The papermaking mat according to any one of claims 2 to 4,
wherein the inorganic binder contains at least one selected from the group consisting of alumina, silica, silicon carbide, zirconia, boron nitride, diamond, and pumice.

**6.** The papermaking mat according to any one of claims 1 to 5,

wherein the fiber bundles are each formed from 10 or more of the inorganic fibers entangled,
the fiber bundles each formed from 10 or more of the inorganic fibers entangled have an average length of more than 5 mm but not more than 15 mm, and
the fiber bundles each formed from 10 or more of the inorganic fibers entangled have an average width of 0.2 to 1.0 mm.

**7.** The papermaking mat according to any one of claims 1 to 6,

wherein the fiber bundles include a crimped fiber bundle, and
a trace length of the crimped fiber bundle as measured by a trace length measurement method described below is greater than a length of the crimped fiber bundle by 0.1 mm or more:
trace length measurement method:

a crimped fiber bundle is placed still on a flat surface; and
the crimped fiber bundle placed still is traced therealong from one end to another end thereof as viewed from above to determine a traced distance as "trace length of the crimped fiber bundle".

**8.** A method for producing a papermaking mat, the method comprising:

a fiber opening step of subjecting an inorganic fiber molded body consisting of an aggregate of inorganic fibers is stirred to fiber opening by using a stirrer in water and producing a slurry containing the inorganic fibers that include: inorganic fibers forming fiber bundles each formed from 10 or more of the inorganic fibers entangled and twisted together, and inorganic fibers forming no fiber bundles; and
a papermaking step of papermaking from the slurry to obtain a papermaking mat,

wherein in the fiber opening step, fiber opening is performed such that the fiber bundles have an average length of more than 5 mm and that the inorganic fibers in the slurry have a bulk specific gravity in water of 0.012 to 0.035 g/cm$^3$,
the inorganic fibers include at least one selected from the group consisting of alumina fibers, silica fibers, alumina-silica fibers, mullite fibers, glass fibers, and bio-soluble fibers.

**9.** The method for producing a papermaking mat according to claim 8,
wherein the inorganic fiber molded body includes at least one of a first inorganic fiber molded body derived from a needle-punched mat or a second inorganic fiber molded body derived from a papermaking mat.

**Patentansprüche**

**1.** Papierherstellungsmatte umfassend:

anorganische Fasern, einschließlich

anorganischer Fasern, die Faserbündel bilden, wobei jedes aus 10 oder mehr der anorganischen Fasern gebildet ist, die miteinander verwickelt und verdreht sind, und
anorganischer Fasern, die keine Faserbündel bilden;

wobei die Faserbündel eine durchschnittliche Länge von mehr als 5 mm aufweisen,
die anorganischen Fasern mindestens eine umfassen, ausgewählt aus der Gruppe bestehend aus Aluminiumoxidfasern, Siliciumdioxidfasern, Aluminiumoxid-Siliciumdioxidfasern, Mullitfasern, Glasfasern und biolöslichen Fasern, und
wenn die Papierherstellungsmatte durch ein nachstehend beschriebenes Faseröffnungsverfahren für Papierherstellungsmatten einer Faseröffnung unterzogen wird, um eine die anorganischen Fasern enthaltende Aufschlämmung zu erhalten, die anorganischen Fasern in der Aufschlämmung ein spezifisches Gewicht in Wasser von 0,012 bis 0,035 g/cm$^3$ aufweisen,
Faseröffnungsverfahren für Papierherstellungsmatten:

eine Papierherstellungsmatte wird eine Stunde lang bei 600 °C wärmebehandelt;
5,0 g Fasern werden aus der Papierherstellungsmatte abgewogen, während die Fasern aufgelockert werden, und die Fasern werden in einen Behälter gegeben, der 400 cm$^3$ Wasser enthält;
die Fasern werden unter Verwendung eines Rührers bei einer Drehzahl von 1000 U/min für 10 Minuten gerührt und anschließend in einen Messzylinder überführt, und Wasser wird zugesetzt, um ein Gesamtvolumen von 500 cm$^3$ herzustellen; und
nach einem Stehenlassen für 30 Minuten wird die Höhe der abgesetzten Fasern abgelesen, und das spezifische Gewicht in Wasser wird unter Verwendung der folgenden Berechnungsformel (1) berechnet:

Spezifisches Gewicht in Wasser (g/cm$^3$) = 5,0 (g) / Volumen der abgesetzten Fasern (cm$^3$) (1). (1).

**2.** Papierherstellungsmatte nach Anspruch 1,
wobei die Papierherstellungsmatte ein organisches Bindemittel in einer Menge von 0,1 bis 20 Gewichtsteilen und ein anorganisches Bindemittel in einer Menge von 0,1 bis 10 Gewichtsteilen pro 100 Gewichtsteile der anorganischen Fasern enthält.

**3.** Papierherstellungsmatte nach Anspruch 2,
wobei das organische Bindemittel eine Glasübergangstemperatur Tg von 5°C oder niedriger aufweist.

**4.** Papierherstellungsmatte nach Anspruch 2 oder 3,
wobei das organische Bindemittel mindestens eines ist, ausgewählt aus der Gruppe bestehend aus: Acrylharzen, Acrylatlatices, Kautschuklatices, Carboxymethylcellulose und Polyvinylalkohol, die alle als wasserlösliche organische Polymere wirken; Styrolharzen, die als ein thermoplastisches Harz wirken; und Epoxidharzen, die als ein wärmehärtbares Harz wirken.

5. Papierherstellungsmatte nach einem der Ansprüche 2 bis 4,
wobei das anorganische Bindemittel mindestens eines enthält, ausgewählt aus der Gruppe bestehend aus Aluminiumoxid, Siliciumdioxid, Siliciumcarbid, Zirconiumdioxid, Bornitrid, Diamant und Bims.

6. Papierherstellungsmatte nach einem der Ansprüche 1 bis 5,

wobei die Faserbündel jeweils aus 10 oder mehr der miteinander verwickelten anorganischen Fasern gebildet sind,
die jeweils aus 10 oder mehr der miteinander verwickelten anorganischen Fasern gebildeten Faserbündel eine durchschnittliche Länge von mehr als 5 mm, jedoch nicht mehr als 15 mm, aufweisen, und
die jeweils aus 10 oder mehr der miteinander verwickelten anorganischen Fasern gebildeten Faserbündel eine durchschnittliche Breite von 0,2 bis 1,0 mm aufweisen.

7. Papierherstellungsmatte nach einem der Ansprüche 1 bis 6,

wobei die Faserbündel ein gekräuseltes Faserbündel umfassen, und
eine Spurlänge des gekräuselten Faserbündels, wie sie durch ein nachstehend beschriebenes Spurlängenmessverfahren gemessen wird, um 0,1 mm oder mehr größer ist als eine Länge des gekräuselten Faserbündels:

Spurlängenmessverfahren:

ein gekräuseltes Faserbündel wird auf einer flachen Oberfläche ruhend platziert; und
das ruhend platzierte gekräuselte Faserbündel wird bei Betrachtung von oben entlang desselben von einem Ende bis zu seinem anderen Ende nachverfolgt, um einen nachverfolgten Abstand als "Spurlänge des gekräuselten Faserbündels" zu bestimmen.

8. Verfahren zur Herstellung einer Papierherstellungsmatte, wobei das Verfahren umfasst:
einen Faseröffnungsschritt, bei dem ein aus einem Aggregat anorganischer Fasern bestehender Formkörper aus anorganischen Fasern unter Verwendung eines Rührers in Wasser zur Faseröffnung gerührt wird und eine Aufschlämmung hergestellt wird, welche die anorganischen Fasern enthält, die umfassen:

anorganische Fasern, die Faserbündel bilden, wobei jedes aus 10 oder mehr der anorganischen Fasern gebildet ist, die miteinander verwickelt und verdreht sind, und anorganische Fasern, die keine Faserbündel bilden; und
einen Papierherstellungsschritt, bei dem aus der Aufschlämmung Papier hergestellt wird, um eine Papierherstellungsmatte zu erhalten,
wobei in dem Faseröffnungsschritt eine Faseröffnung derart durchgeführt wird, dass die Faserbündel eine durchschnittliche Länge von mehr als 5 mm aufweisen und dass die anorganischen Fasern in der Aufschlämmung ein spezifisches Gewicht in Wasser von 0,012 bis 0,035 g/cm$^3$ aufweisen,
die anorganischen Fasern mindestens eine umfassen, ausgewählt aus der Gruppe bestehend aus Aluminiumoxidfasern, Siliciumdioxidfasern, Aluminiumoxid-Siliciumdioxidfasern, Mullitfasern, Glasfasern und biolöslichen Fasern.

9. Verfahren zur Herstellung einer Papierherstellungsmatte nach Anspruch 8,
wobei der aus anorganischen Fasern geformte Körper mindestens einen umfasst von einem ersten aus anorganischen Fasern geformten Körper, der von einer vernadelten Matte stammt, oder einem zweiten aus anorganischen Fasern geformten Körper, der von einer Papierherstellungsmatte stammt.

## Revendications

1. Matelas de fabrication de papier comprenant :

des fibres inorganiques incluant

des fibres inorganiques formant des faisceaux de fibres, chacun constitué de 10 fibres inorganiques ou plus enchevêtrées et torsadées ensemble, et
des fibres inorganiques ne formant pas de faisceaux de fibres ;

dans lequel les faisceaux de fibres présentent une longueur moyenne supérieure à 5 mm,
les fibres inorganiques incluent au moins une fibre choisie dans le groupe parmi les fibres d'alumine, les fibres de silice, les fibres d'alumine-silice, les fibres de mullite, les fibres de verre et les fibres biosolubles, et
lorsque le matelas de fabrication de papier est soumis à une ouverture des fibres par un procédé d'ouverture des fibres pour les matelas de fabrication de papier décrits ci-dessous afin d'obtenir une suspension contenant les fibres inorganiques, les fibres inorganiques dans la suspension présentent une densité apparente dans l'eau de 0,012 à 0,035 g/cm$^3$,
procédé d'ouverture des fibres pour les matelas de fabrication de papier :

un matelas de fabrication de papier est traité thermiquement à 600 °C pendant une heure ;
5,0 g de fibres sont pesées à partir du matelas de fabrication de papier tout en détachant les fibres, et les fibres sont placées dans un récipient contenant 400 cc d'eau ;
les fibres sont agitées à l'aide d'un agitateur à une vitesse de rotation de 1000 tr/min pendant 10 minutes, puis transférées dans un récipient cylindrique gradué, et de l'eau est ajoutée pour obtenir un volume total de 500 cc ; et
après avoir reposé pendant 30 minutes, la hauteur des fibres déposées est lue et la densité apparente dans l'eau est calculée à l'aide de la formule de calcul suivante (1) : densité apparente dans l'eau (g/cm$^3$) =5,0 (g)/volume de fibres déposées (cm$^3$) (1).

**2.** Matelas de fabrication de papier selon la revendication 1,
dans lequel le matelas de fabrication de papier contient un liant organique en une quantité de 0,1 à 20 parties en poids et un liant inorganique en une quantité de 0,1 à 10 parties en poids pour 100 parties en poids des fibres inorganiques.

**3.** Matelas de fabrication de papier selon la revendication 2,
dans lequel le liant organique présente une température de transition vitreuse Tg de 5 °C ou moins.

**4.** Matelas de fabrication de papier selon la revendication 2 ou 3,
dans lequel le liant organique est au moins un liant choisi dans le groupe parmi : les résines acryliques, les latex d'acrylate, les latex de caoutchouc, la carboxyméthylcellulose et l'alcool polyvinylique qui agissent tous comme des polymères organiques hydrosolubles ; les résines styréniques qui agissent comme une résine thermoplastique ; et les résines époxy qui agissent comme une résine thermodurcissable.

**5.** Matelas de fabrication de papier selon l'une quelconque des revendications 2 à 4,
dans lequel le liant inorganique contient au moins un élément choisi dans le groupe parmi l'alumine, la silice, le carbure de silicium, la zircone, le nitrure de bore, le diamant et la pierre ponce.

**6.** Matelas de fabrication de papier selon l'une quelconque des revendications 1 à 5,

dans lequel chaque faisceau de fibres est formé de 10 fibres inorganiques ou plus enchevêtrées,
les faisceaux de fibres, chacun formé de 10 fibres inorganiques ou plus enchevêtrées, présentent une longueur moyenne supérieure à 5 mm mais inférieure ou égale à 15 mm et
les faisceaux de fibres, chacun formé de 10 fibres inorganiques ou plus enchevêtrées, présentent une largeur moyenne de 0,2 à 1,0 mm.

**7.** Matelas de fabrication de papier selon l'une quelconque des revendications 1 à 6,

dans lequel les faisceaux de fibres incluent un faisceau de fibres ondulées, et
la longueur tracée du faisceau de fibres ondulées, mesurée par un procédé de mesure de longueur tracée décrit ci-dessous, est supérieure à la longueur du faisceau de fibres ondulées de 0,1 mm ou plus :
procédé de mesure de longueur tracée :

un faisceau de fibres ondulées est placé immobile sur une surface plane ; et
le faisceau de fibres ondulées placé immobile est tracé d'une extrémité à l'autre, vu de dessus, afin de déterminer une distance tracée appelée « longueur tracée du faisceau de fibres ondulées ».

**8.** Procédé de production d'un matelas de fabrication de papier, le procédé comprenant :

une étape d'ouverture des fibres consistant à soumettre un corps moulé en fibres inorganiques constitué d'un

agrégat de fibres inorganiques qui est agité pour ouvrir les fibres à l'aide d'un agitateur dans l'eau et à produire une suspension contenant les fibres inorganiques qui incluent : des fibres inorganiques formant des faisceaux de fibres, chacun étant formé de 10 fibres inorganiques ou plus enchevêtrées et torsadées ensemble, et des fibres inorganiques ne formant pas de faisceaux de fibres ; et
une étape de fabrication du papier à partir de la suspension pour obtenir un matelas de fabrication de papier,
dans lequel lors de l'étape d'ouverture des fibres, l'ouverture des fibres est effectuée de sorte que les faisceaux de fibres présentent une longueur moyenne supérieure à 5 mm et que les fibres inorganiques dans la suspension présentent une densité apparente dans l'eau de 0,012 à 0,035 g/cm$^3$,
les fibres inorganiques incluent au moins une fibre choisie dans le groupe parmi les fibres d'alumine, les fibres de silice, les fibres d'alumine-silice, les fibres de mullite, les fibres de verre et les fibres biosolubles.

**9.** Procédé de production d'un matelas de fabrication de papier selon la revendication 8,
dans lequel le corps moulé en fibres inorganiques inclut au moins un d'un premier corps moulé en fibres inorganiques dérivé d'un matelas aiguilleté ou d'un second corps moulé en fibres inorganiques dérivé d'un matelas de fabrication de papier.

FIG.1A

10
11a
11
12a
12

FIG.1B

22
21(21b)
L
Wb(W)
21e1
a
d
L
Wa(W)
21e2
21(21a)
20

FIG.2

21b
Lt
P1
P2
L
S

FIG.3

40
40b
43
30
42
10
100
40a
41
G

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018012423 A1
- JP 2008082310 A
- EP 4012085 A1
- US 8999251 B2